(19) Europäisches Patentamt
European Patent Office
Office européen des brevets

(11) Publication number: **0 193 725 B1**

# (12) EUROPEAN PATENT SPECIFICATION

(45) Date of publication of patent specification: **27.03.91** (51) Int. Cl.[5]: **D01D 5/24**, B01D 61/00

(21) Application number: **86100985.0**

(22) Date of filing: **24.01.86**

## (54) Process for spinning hollow fiber membranes.

(30) Priority: **07.03.85 SE 8501111**

(43) Date of publication of application:
**10.09.86 Bulletin 86/37**

(45) Publication of the grant of the patent:
**27.03.91 Bulletin 91/13**

(84) Designated Contracting States:
**AT BE CH DE FR GB IT LI LU NL**

(56) References cited:
**EP-A- 0 006 030**
**EP-A- 0 077 098**
**DE-A- 2 921 138**
**EP-A- 0 076 442**
**EP-A- 0 100 285**
**FR-A- 2 435 276**

**PATENT ABSTRACTS OF JAPAN, vol. 3, no. 79 (C-51), 6th July 1979, page 109 C 51; & JP-A-54 55 623 (MITSUBISHI RAYON K.K.) 05-02-1979**

(73) Proprietor: **Gambro Dialysatoren GmbH & Co. KG**
**Postfach 1323**
**W-7450 Hechingen(DE)**

(72) Inventor: **Buck, Reinhold Johann**
**Ortsstrasse 27**
**W-7941 Alleshausen(DE)**
Inventor: **Göhl, Hermann Joseph**
**Ganswies 8**
**W-7457 Bisingen-Zimmern(DE)**
Inventor: **Harttig, Erich Herbert**
**Finkenweg 1**
**W-7450 Hechingen(DE)**

(74) Representative: **Boberg, Nils Gunnar Erik**
**Gambro AB Patent Department Box 10101**
**S-220 10 Lund(SE)**

**EP 0 193 725 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### TECHNICAL FIELD

This invention relates to a process for spinning a semipermeable hollow fiber membrane with improved properties.

More specifically, the invention is concerned with a process for producing a hollow fiber membrane in that way that there occurs higher hydrophilicity of the hollow fiber inside which leads to higher performance and less fouling.

Hollow fiber membranes are today extensively used in a large range of diffusive and/or convective separation processes, and this invention is particularly, though not exclusively, concerned with hollow fiber membranes for use in extracorporeal treatment of blood, such as hemofiltration, hemodialysis etc.

### BACKGROUND OF THE INVENTION

It is a well known technique to produce hollow fiber membranes by coextrusion of a polymer solved in a suitable solvent or solvent system and a fluid that may be inert or may be a coagulation or precipitation fluid. The polymer solution is extruded through a circular orifice. The inert fluid or coagulating or precipitating fluid is extruded out of a bore in the center of the circular slit. This fluid is called center fluid or center medium. It is common practice to let the coextrudate run through atmosphere for short time, ranging from parts of seconds to some seconds and often it is claimed to influence the properties of the resulting hollow fiber membrane by the length of this air gap. Going on it is usual to draw the coextrudate through some fluids that may, but need not be identical with the center fluid. The center fluid and/or the consecutive treatment fluids cause a phase inversion and at last precipitation and solidification of the membrane. This process is decisive of the membrane properties as there are pore structure, pore size, pore size distribution, wettability, burst pressure, permeability and rejection properties.

One property of a hollow fiber membrane that is of extreme importance especially for use of hollow fiber membranes in medical applications is the surface energy. The surface energy of a polymer depends on the nature of the groups that are present on the surface. In the case of blood contact it is well known that a high surface energy surface tends less to adsorb proteins or cellular components that may cause coagulation than surfaces with a low surface energy. The surface energy corresponds with the wettability. The higher the surface energy of a surface, the better is the wettability. Usually water is used as wetting agent. The lower the contact angle with water, the higher is the wettability and the surface energy.

Highly wettable surfaces of membranes also lead to high diffusive permeabilities and therefore to higher clearances in dialysis processes. The object of this invention is therefore to provide a process for producing a hollow fiber membrane with an improved wettability of the fiber inside.

It is a common technique to collect the hollow fiber membranes to bundles and to pot it into suitable housings. For potting with the mainly used potting material, two component polyurethane, it is essential to bring the hollow fiber membranes into a dry state. Therefore the hollow fiber membranes have to be stabilized against irreversible shrinkage and loss of filtration properties during drying. This commonly is done with glycerol especially with membranes for medical use as disclosed in for example European Patent Publication No 0 046 817.

The common technique requires a lot of discontinuous production steps to come from the precipitated hollow fiber membrane to a bundle ready to be potted. The hollow fiber membranes have to be collected, made into bundles, the center fluid has to be removed, the hollow fiber membranes must be rinsed, treated with a stabilizing agent against shrinkage and loss of properties during drying, the excess stabilizing agent has to be removed and the bundle of hollow fiber membranes has to be dried to be ready for potting.

It is obviously of high interest to find a production route that avoids expensive rinsing procedures and reduces discontinuous production steps. Another object of this invention is therefore to provide a process for producing a dry hollow fiber membrane bundle ready for potting on line and being made of a biocompatible material such as those described in DE-A-29 21 138, which discloses a process according to the preamble of claim 1.

As regards the use of gases and/or vapors as center medium reference is being made to FR-A-2 435 276, EP-A-I00 285 and EP-A-77 098.

### DESCRIPTION OF THE INVENTION

According to the invention is thus provided a process for producing a homogeneous semipermeable hollow fiber membrane with an inner fiber surface having improved wettability characteristics comprising extruding a solution of a block copolymer including at least one hydrophilic polymer and at least one hydrophobic polymer so as to produce an extrudate of said block copolymer in the form of a hollow fiber having an inner surface, simultaneously injecting a center medium into the center bore of said hollow fiber extrudate and coagulating said hollow fiber extrudate of said block copolymer, so as to form a solidified homogeneous membrane of said block copolymer by extruding said hollow fiber extrudate directly into a fluid capable of causing the coagulation of said hollow fiber extrudate, characterized in that said center medium comprises a non-polar center medium selected from the group consisting of gases, vapors and mixtures thereof, whereby said center medium causes an increase in the wettability of said inner surface of said hollow fiber.

The polymer is chosen among block copolymers comprising at least one hydrophilic polymer block and at least one hydrophobic polymer block. Said block copolymers may be binary, tertiary or quartenary block copolymers.

For example, said block copolymer may be chosen from a series of block copolymers with the schematic structure

$$-(A-B)_n-$$

where A is a block of variable length of a hydrophilic or water soluble polymer and B is a block of variable length of a hydrophobic polymer, and where n is an integer from 1 to 1000.

Suitable block copolymers may also be chosen from a series of block copolymers with the schematic structure

$$-(A-B-C-D)_n-$$

in which A, B, C, D may, but need not, be identical, but at least one of which is a block of variable length of a hydrophilic or water soluble polymer and at least one of which is a block of variable length of a hydrophobic polymer, and in which n is an integer from 1 to 1000.

Examples of said hydrophobic polymer block are polyvinylchloride, polyacrylonitrile, polyethylene, polypropylene, polytetrafluorethylene, polyvinylidenefluoride, polymethylmethacrylate, polycarbonate, polystyrene, polyphenylene, polysulfone, polyimide, polyetherimide and polysiloxane.

Examples of said hydrophilic polymer block are polyvinylpyrrolidone, polyhydroxymethylmethacrylate, polymethacrylic acid, polyethyleneoxide, polyvinylalcohol, polysaccharide and polyimine.

A copolymer of special interest is polyethyleneoxide-polycarbonate-copolymer. This material is useful for making membranes thereof for the use in diffusive and filtrative operation processes.

Polymers that contain polar and apolar groups show a dependence of the surface energy on the process of their formation. For example it is reported by Mayrhofer and Sell (Angew. makromol. Chem. 20 (1971) 153) that different types of polyesters solidified against mica show contact angles with waters that are 8 to 16 degrees lower than with the similar polyester solidified against air. Generally there results a minimization of the interfacial energy.

Therefore it was very surprising to find an increased wettability of the inner surface of a hollow fiber membrane made from polyethyleneoxide-polycarbonate-copolymer when, according to the invention, instead of the polar center fluid water the unpolar nitrogen gas was used. The process according to the invention also can be done with other gases or vapors of low boiling liquids or mixtures of different gases or mixtures of different vapors or mixtures of gases and vapors.

The structure of the membrane was homogeneous without a skin on inside or outside. No change in structure and diffusive and filtrative properties could be seen with a hollow fiber membrane produced according to the invention with a constant wall thickness, when the diameter of the circular slit of the orifice was changed, or when the spinning speed was changed, or when the circular stretch of the membrane in the state of precipitation was changed, or when the temperature of the first coagulation bath was varied between 0 and 45 °C.

Besides the highly advantageous improved wettability, the process is characterized by an improved technique of preparation of a dry bundle of hollow fiber membranes ready to potting.

It was found that the speed and the rate of the removal of solvent was increased. The uptake of stabilizing agent could be done on line and the drying too, without loss of filtrative and diffusive properties.

The invention will be further illustrated by the following examples:

Example 1

A solution of 14% by weight polyethyleneoxide-polycarbonate-copolymer with a ratio polyethyleneoxide: Polycarbonate of 20:80 and 86% by weight 1.3-Dioxolane with a viscosity of 19757 cP was prepared. The solution was extruded through a circular slit orifice. The center bore of the orifice was connected to a nitrogen pressure reducer with a constant pressure of 65 mm Hg. The orifice was immersed into water of 40 °C. The depth was 770 mm. The fiber was drawn through some bathes to remove the dioxolane. The resultant hollow fiber membrane had an inner diameter of 250 µm and a constant wall thickness of 16 µm.

After additional washing with distilled water for 16 hours, the advancing contact angle $\theta_a$ of the inner surface against water was measured. This was done by observation of a very slowly moving air bubble in the water-filled, in water immersed hollow fiber membrane at 20 °C.

For comparison the advancing contact angles $\theta_a$ of water against the inner surface of a conventional with water as center medium spun polyethyleneoxide-polycarbonate-copolymer hollow fiber membrane and of a cuprophane hollow fiber membrane also was measured.

The following results were obtained:

Table 1

| | n | $\theta_a$ (deg) |
|---|---|---|
| PEC with nitrogen as center | 10 | 30.4 ± 1.7 |
| PEC with water as center | 10 | 50.8 ± 2.5 |
| Cuprophane | 10 | 17.5 ± 3.3 |

Example 2

Hollow fiber membranes were spun as described in example 1 and collected to bundles. The bundles were treated in a solution containing 40% by weight of glycerol and 60% of weight of water, dried and potted with PUR in dialyzer housings. The resulting polyethyleneoxide-polycarbonate-hollow fiber dialzyers had the properties listed in table 2 below:

Table 2

| | |
|---|---|
| Active area ($m^2$) | 1.0 |
| UF in vitro (ml/h) | 746 |
| Clearance in vitro (ml/min) | |
| Chloride | 176 |
| $Q_B$ = 200 ml/min | |
| $Q_D$ = 500 " | |

Example 3

Hollow fiber membranes were spun as described in example 1. Before the fibers were collected to bundles, they ran through a bath with a stabilizing fluid according to example 2. The treatment time was 12 sec at 22 °C. The bundles were dried and potted with PUR into dialyzer housings. The resulting polyethyleneoxide-polycarbonate-hollow fiber dialyzers had the properties listed in table 3 below:

Table 3

| | |
|---|---|
| Active area ($m^2$) | 1.0 |
| UF in vitro (ml/h) | 668 |
| Clearance in vitro (ml/min) | |
| Chloride | 174 |
| $Q_B$ = 200 ml/min | |
| $Q_D$ = 500 " | |

Example 4

Hollow fiber membranes were spun according to example 3. Before collecting the hollow fiber membrane into bundles, the hollow fibers were dried in an air channel at 40 °C. The drying time was 23 sec. The bundles were potted with PUR in dialyzer housings.

The resulting polyethyleneoxide-polycarbonate dialyzers had the properties listed in table 4 below:

Table 4

| | |
|---|---|
| Active area ($m^2$) | 1.0 |
| UF in vitro (ml/h) | 668 |
| Clearance in vitro (ml/min) | |
| Chloride | 175 |
| $Q_B$ = 200 ml/min | |
| $Q_D$ = 500 " | |

Hollow fiber membranes out of a bundle were rinsed for 16 hours with distilled water and the advancing contact angle against water in the fibre inside was measured according to the method of example 1. The result was: $\theta_a$ = 28.9 ± 3.1 (deg).

INDUSTRIAL APPLICABILITY

The process according to the invention may be used to produce a dry semipermeable hollow fiber membrane with improved wettability of the inside for any diffusive and/or convective separation process in an on-line process.

The present process is, however, particularly, though not exclusively, useful in connection with semipermeable hollow fiber membranes for use in an extracorporeal treatment of blood, such as hemodialysis, hemodiafiltration, hemofiltration etc.

## Claims

1. A process for producing a homogeneous semipermeable hollow fiber membrane with an inner fiber surface having improved wettability characteristics comprising extruding a solution of a block copolymer including at least one hydrophilic polymer and at least one hydrophobic polymer so as to produce an extrudate of said block copolymer in the form of a hollow fiber having an inner surface,

simultaneously injecting a center medium into the center bore of said hollow fiber extrudate and coagulating said hollow fiber extrudate of said block copolymer, so as to form a solidified homogeneous membrane of said block copolymer by extruding said hollow fiber extrudate into a fluid capable of causing the coagulation of said hollow fiber extrudate, **characterized** in that said center medium comprises a non-polar center medium selected from the group consisting of gases, vapors and mixtures thereof, whereby said center medium causes an increase in the wettability of said inner surface of said hollow fiber.

**2.** Process according to claim 1, **characterized** in that said center medium is air or components thereof.

**3.** Process according to claim 2, **characterized** in that the hollow fiber is extruded directly into a coagulating fluid.

**4.** Process according to claim 3, **characterized** in that the coagulated hollow fiber is dried.

**5.** Process according to any of claims 1-4, **characterized** in that said hydrophilic polymer block is chosen from polyvinylpyrrolidone, polyhydroxymethyl-methacrylate, polymethacrylic acid, polyethyleneoxide, polyvinylalcohol, polysaccharide and polyimine.

**6.** Process according to any of claims 1-5, **characterized** in that said hydrophobic polymer block is chosen from polyvinylchloride, polyacrylonitrile, polyethylene, polypropylene, polytetrafluorethylene, polyvinylidenefluoride, polymethylmethacrylate, polycarbonate, polystyrene, polyphenylene, polysurfone, polyimide, polyetherimide and polysiloxane.

**7.** Process according to any of claims 1-6, **characterized** in that said polymer is a polyethyleneoxidepolycarbonate block copolymer.

**Revendications**

**1.** Procéaé permettant de proquire une membrane en forme de fibre creuse, semi-Perméable et homogène, comportant une surface intérieure de fibre et possédant des caractéristiques améliorées de mouillapilité, du type consistant à extruder une solution d'un copolymère séquencé comportant au moins un polymère hydrophile et au moins un polymère nydrophobe, de façon à former un produit d'extrusion constitué dudit copolymère séquencé et se présentant sous la forme d'une fibre creuse comportant une surface intérieure, à injecter simultanément un fluide central dans le passage central de ce produit d'extrusion en forme de fibre creuse et à faire se coaguler ce produit d'extrusion en forme de fibre creuse et constitué dudit copolymère séquencé, de façon à former une membrane homogène solidifiée, constituée dudit copolymère séquencé, en extrudant ce produit d'extrusion en forme de fibre creuse dans un fluide apte à en provoquer la coagulation, caractérisé en ce que le fluide central est constitué d'un fluide central non-polaire choisi dans le groupe formé par des gaz, des vapeurs et des mélanges de ceux-ci, ce fluide central provoquant ainsi une augmentation de la mouillabilité de la surface intérieure de la fibre creuse.

**2.** Procédé suivant la revendication 1, caractérisé en ce que le fluide central est constitué par de l'air ou des composants de celui-ci.

**3.** Procédé suivant la revendication 2, caractérisé en ce que la fibre creuse est extrudée directement dans un fluide coagulant.

**4.** Procédé suivant la revendication 3, caractérisé en ce qu'on sèche la fibre creuse coagulée.

**5.** Procédé suivant l'une quelconque des revendications 1 à 4, caractérisé en ce que le segment de polymère hydrophile est choisi parmi le polyvinylpyrrolidone, le polyhydroxyméthylméthacrylate, l'acide polyméthacrylique, l'oxyde de polyéthylène, l'alcool polyvinylique, un glucide de haut poids moléculaire et une polyimine.

**6.** Procéué svuiant l'une quelconque des revendications 1 à 5, carctérisé en ce que le segment de

polymère hydrophobe est choisi parmi le chlorure de polyvinyle, le polyacrylonitrile, le polyéthylène, le polypropylène, le polytétrafluoroéthylène, le fluorure de polyvinylidène, le polyméthylméthacrylate, le polycarbonate, le polystyrène, le polyphénylène, une polysulfone, un polyimide, un polyéthérimide et un polysiloxane.

7. Procédé suivant l'une quelconque des revendications 1 à 6, caractérisé en ce que le polymère est un copolymère séquencé oxyde de polyéthylène/polycarbonate.

## Ansprüche

1. Verfahren zur Herstellung einer homogenen semipermeablen Hohlfasermembran mit einer inneren Faseroberfläche mit verbesserten Benetzbarkeitseigenschaften, bei dem man eine Lösung eines wenigstens ein hydrophiles Polymer und wenigstens ein hydrophobes Polymer einschließenden Blockmischpolymers derart extrudiert, daß man ein Extrudat dieses Blockmischpolymers in der Form einer Hohlfaser mit einer inneren Oberfläche erzeugt, gleichzeitig ein Mittelmedium in den Mittelkanal des Hohlfaserextrudates einspritzt und das Hohlfaserextrudat des Blockmischpolymers derart koaguliert, daß sich eine verfestigte homogene Membran des Blockmischpolymers bildet, indem man das Hohlfaserextrudat in ein Fluid extrudiert, das die Koagulation des Hohlfaserextrudats bewirken kann, **dadurch gekennzeichnet,** daß das Mittelmedium ein nichtpolares Mittelmedium umfaßt, das unter Gasen, Dämpfen und Gemischen hiervon ausgewählt ist, wobei das Mittelmedium eine Steigerung der Benetzbarkeit der inneren Oberfläche der Hohlfaser bewirkt.

2. Verfahren nach Anspruch 1, **dadurch gekennzeichnet,** daß das Mittelmedium aus Luft oder Komponenten hiervon besteht.

3. Verfahren nach Anspruch 2, **dadurch gekennzeichnet,** daß die Hohlfaser direkt in ein koagulierendes Fluid extrudiert wird.

4. Verfahren nach Anspruch 3, **dadurch gekennzeichnet,** daß die koagulierte Hohlfaser getrocknet wird.

5. Verfahren nach einem der Ansprüche 1 bis 4, **dadurch gekennzeichnet,** daß der hydrophile Polymerblock aus Polyvinylpyrrolidon, Polyhydroxymethylmethacrylat, Polymethacrylsäure, Polyethylenoxid, Polyvinylalkohol, Polysaccharid und Polyimin ausgewählt ist.

6. Verfahren nach einem der Anspirüche 1 bis 5, **dadurch gekennzeichnet,** daß der hydrophobe Polymerblock aus Polyvinylchlorid, Polyacrylnitril, Polyethylen, Polypropylen, Polytetrafluorethylen, Polyvinylidenfluorid, Polymethylmethacrylat, Polycarbonat, Polystyrol, Polyphenylen, Polysulfon, Polyimid, Polyetherimid und Polysiloxan ausgewählt ist.

7. Verfahren nach einem der Ansprüche 1 bis 6, **dadurch gekennzeichnet,** daß das Polymer ein Polyethylenoxid-Polycarbonat-Blockmischpolymer ist.